# EUROPEAN PATENT APPLICATION

(11) **EP 3 805 155 A2**
(43) Date of publication of application: **14.04.2021**
(21) Application number: 19735655.3
(22) Date of filing: 27.05.2019
(51) Int. Cl.: C01B 32/194, B82Y 30/00, B82Y 40/00

(54) **PROCESS, REACTOR AND SYSTEM FOR CUSTOMIZING AUTONOMOUS NANOSTRUCTURES USING MICROWAVE PLASMA**

(30) Priority: 29.05.2018 PT 2018110764
(71) Applicant: Instituto Superior Técnico, 1049-001 Lisboa (PT)
(72) Inventor: STEFANOVA TATAROVA, Elena, 2775-524 CARCAVELOS (PT); DOS SANTOS DUARTE VIEIRA HENRIQUES, Júlio Paulo, 2625-230 PÓVOA DE SANTA IRIA (PT); MOTA CAPITÃO LEMOS ALVES, Luís Paulo, 2790-017 CARNAXIDE (PT); SOARES GONÇALVES, Bruno Miguel, 2615-004 ALVERCA DO RIBATEJO (PT)
(74) Representative: Alves Moreira, Pedro
(86) International application number: PCT/PT2019/000003
(87) International publication number: WO 2019/231342

(57) **Abstract**

The invention relates to a process, reactor and system for the customization of autonomous nanostructures, using a microwave excited plasma environment sustained by surface waves (SW).

Two distinct streams are injected into two distinct zones of a plasma reactor, the first stream (FS) being constituted by carrier gases and by the nanostructures to customize and the second stream (SS) by a mixture of inert gases, at least one precursor of the dopant component (PDC) and/or at least one type of microparticles (MP). The FS is injected into part (7) of the reactor and the SS in part (6). The SS is exposed to the electric field of a surface wave excited by using microwave power, creating a hot plasma (8). The two streams join together in zones (4) and (5), where the nanostructures are customized through their interaction with the components coming from the SS.

## Description

### Field of the Invention

The present invention generally relates to a process and to a reactor and system for the customization of autonomous/free nanostructures using plasma technology, in particular surface wave (SW) sustained microwave plasmas.

### Background of the Invention

Currently, the customization of new nanostructures is one of the areas of research in science and technology that presents greater demand and, as such, greater strategic value. In general, there are two different ways of customizing nanostructures, direct synthesis and post-treatment. In the case of the customization of graphene nanostructures, one of the applications of this invention, more specifically the doping of graphene with nitrogen atoms (N-graphene), the direct synthesis processes include: chemical vapour deposition (CVD), segregation growth, solvothermal synthesis and arc discharges (US2015037515 (A1), 2015; CA2845539 (A1) 2013-05-10; Yu-Fen Lu, Shun-Tsung Lo, Jheng-Cyuan Lin, Wenjing Zhang, Jing-Yu Lu, Fan-Hung Liu, Chuan-Ming Tseng, Yi-Hsien Lee, Chi-Te Liang, Lain-Jong Li, "Nitrogen-Doped Graphene Sheets Grown by Chemical Vapor Deposition: Synthesis and Influence of Nitrogen Impurities on Carrier Transport" 2013 ACS Nano 7 (8), 6522-6532; Zhang C, Fu L, Liu N, Liu M, Wang Y, Liu Z, "Synthesis of nitrogen-doped graphene using embedded carbon and nitrogen sources" 2011 Adv Mater. 23(8) 1020-1024; Mohammad Choucair, Pall Thordarson, John A. Stride, "Gram-scale production of graphene based on solvothermal synthesis and sonication" 2009 Nature Nanotechnology 4, 30-33; K. S. Subrahmanyam, L. S. Panchakarla, A. Govindaraj, C. N. R. Rao" Simple Method of Preparing Graphene Flakes by an Arc-Discharge Method" 2009 Journal of Physical Chemistry C, 2009,113,4257-4259).

These direct synthesis techniques have, however, several drawbacks, such as: the degradation of the nanostructure properties due to the interference of transition metals, the need to use expensive catalysts, and vacuum systems which operate at very low pressure and very high working temperatures, which make the processes expensive, long and complex, and require the use of hazardous chemicals. Furthermore, these processes do not allow the customization of free/autonomous nanostructures, requiring the nanostructures to be based on support substrates (the horizontally laid and substrate supported nanostructures have one of their faces implanted on a substrate solid surface), which makes the doping less homogeneous and lengthy and expensive process, to remove the graphene from the substrate.

Direct synthesis techniques do not allow the customization of graphene by itself, but its manufacture and simultaneous doping, using substrates, etc... Although, in principle, the above mentioned direct synthesis techniques have the potential to homogeneously dope all the material that is intended to be customized, so far, there are no published works that prove this. In turn, the customized autonomous nanostructures through the process of the invention have the obvious advantage of being able to use both surfaces and at least three open edges, while substrate bound nanostructures have only one free surface. Moreover, unlike direct synthesis techniques, the technique used in this invention has no associated degradation of nanostructure properties due to the interference of transition metals, it does not depend on the use of expensive catalysts (Fe, Co, Cu, Ni, etc.) and of hazardous chemical products, it does not require high temperatures of operation, it is not characterized by the recognized slowness and complexity of the direct synthesis production procedures known in the state of the art, and does not present the limitations regarding the control over the production process of nanostructures through direct synthesis (E. Tatarova et al, "Plasmas for Environmental Issues: From hydrogen production to 2D materials assembly" 2014 Plasma Sources Sci. Technol. 23 063002-063054).

Recently a patent application has been filed by the same authors of the present invention (E. Tatarova, J. Henriques, L. Alves, B. Gonçalves "Processo, reator e sistema para a produção seletiva de nanoestruturas bidimensionais autónomas utilizando tecnologia de plasma", #20161000032215, Portuguese Patent Pending May 13, 2016) which describes a process, reactor and system for producing autonomous two-dimensional nanostructures, through direct synthesis, in which N-graphene is included, using a microwave excited plasma environment. Although this technique is able to produce N-graphene with high production rates, greater than one gram per hour, and with homogeneous doping, it has however the disadvantage of producing N-graphene with low incorporation percentages of atomic nitrogen (N), typically less than 5%. The present invention, dedicated only to the customization of nanostructures and not to their production, not only solves the problem of the low incorporation of dopant atoms in nanostructures, as for example of nitrogen atoms in graphene, being possible to obtain incorporation percentages of atomic nitrogen higher that 5%, but also has other valences, making it possible to do, not only the incorporation of dopant atoms in nanostructures (for example to dope with nitrogen atoms small autonomous graphene sheets, where nitrogen atoms synthesized by the microwave plasma are incorporated into the two-dimensional structure of graphene, changing its physicochemical properties), but also, at the same time or separately, the production of nanocomposites with metals. The invention process allows customizing nanostructures by creating nanocomposites where microparticles synthesized in the plasma come together with nanostructures forming a composite material, as is the case, for example, of the creation of composite materials of graphene nanostructures with tin microparticles, whose example is described below in the patent text. The invention process also allows to make simultaneously the doping of the nanostructure and the composite material.

In the post-synthesis treatment case, graphene is doped with atomic nitrogen, using processes involving molecular nitrogen at high temperatures or with plasmas. As a rule, N-graphene is produced mainly using graphene oxide (GO) in the presence of atomic nitrogen N precursors (Haibo Wang, Chuanjian Zhang, Zhihong Liu, Li Wang, Pengxian Han, Hongxia Xu, Kejun Zhang, Shanmu Dong, Jianhua Yao, Guanglei Cui, "Nitrogen-doped graphene nanosheets with excellent lithium storage properties" 2011 J. Mater. Chem. 21, 5430-5434).

However, chemical reduction of GO, recognized as one of the most versatile methods for the preparation of graphene-based electrodes, which are used, for example, in energy storage, which in turn is fabricated by the Hummers method from graphite, requires the use of reducing toxic agents. The Hummers method, used in the production of graphene at low-cost in a relatively large scale, has as drawbacks, the fact that the final product has a general lack of micropores that are required for electrochemical energy storage, and also, a moderate electrical conductivity (i.e. due to the presence of reduction residues contamination, saturated sp3 bonds, bounded oxygen groups). Thus, the production of a high conductivity N-graphene becomes a problem.

Generally, the manufacture of N-graphene meets significant problems that are not yet fully addressed, such as: i) controlling the atomic nitrogen (N) bonding type and its distribution; ii) obtaining N doping at a specific position and above all having precise control of the doping content. Nowadays, the production of N-graphene at large-scale is a great challenge.

There is, therefore, a need in the art for a process as well as a reactor and system for customizing different types of nanostructures which solve the above-mentioned problems of the prior art. In particular, it is necessary a process for customizing nanostructures and a reactor and system that implement this process, which are capable of synthesizing nanostructures at varying scales and dimensions with pre-defined and well-controlled structural and physicochemical properties, as well as production rates suitable for industrial applications.

Another application of this invention, the production of graphene-metal nanocomposites, have attracted significant interest. The chemical approaches used in the production of these nanocomposites so far are multi-step processes that are time consuming and use pollutants in the preparation process (Vivek Dhand, Kyong Yop Rhee, Hyun Ju Kim,Dong Ho Jung, "A Comprehensive Review of Graphene Nanocomposites: Research Status and Trends" 2013 Journal of Nanomaterials Volume 2013, 763953).

The main drawback of these conventional methods is the very limited or no control over the assembly process. A good spatial control of the matter and energy fluxes at nanoscale is indispensable for the realization of an environmentally friendly and cost-effective synthesis/customization process, and constitutes one of the main challenges of the conventional nanotechnologies, that is, chemical.

Therefore, existing techniques are not yet capable of providing hybrid nanostructures, based for example on graphene, at varying scales and dimensions with pre-defined and well-controlled structural and physicochemical properties. In this respect, there is a need to trace novel routes and alternative techniques capable of producing nanostructures with these characteristics, while guaranteeing adequate production rates for industrial applications.

To this end, the development of an effective, environmentally friendly, large-scale and low-cost assembly pathway can be considered an anticipated breakthrough in this field. Methods based on plasma technology have a high potential for achieving these objectives.

The plasma reactors and respective customization system used in this invention, which use a very particular type of microwave discharges, the so-called surface-wave (SW) sustained discharges, have a remarkable potential that derives from their ability to simultaneously provide dense flows of charged particles, radicals, heat, photons and electric fields in the sheath domains that can strongly influence the assembly pathways across different temporal/spatial scales, including the atomic ones. However all this potential has been so far under-exploited, a gap that this invention comes to fill.

The plasma reactors and respective customization system presented in this invention include reactions with thermal and chemical functions, as well as catalytic properties. A very important feature of this system is the participation of the charged particles and the electric/magnetic fields in the customization processes. In this system, the production of plasma-assisted nanostructures is performed without using catalysts due to the plasma ability to activate the surface, thus creating favorable conditions for the nucleation and growth processes to take place. The main advantage is having a very high and extremely controllable energy density in the processing area, which allows an effective control over the energy and material fluxes towards growing nanostructures, which is achieved via proper design of the reactor and tailoring of the plasma environment in a synergistic way.

Although several plasma reactors are already known in the state of the art, the reactors and respective customization system used in this invention, for using specifically SW sustained discharges, have provided major breakthroughs, allowing an efficient adaptation of the plasma to this type of application, including the production of large volumes of plasma with high energy density in a variety of complex geometries and the flexible operation at different pressures, fluxes and background gases.

### Summary of the Invention

The present invention relates to a process for customizing autonomous nanostructures, characterized in that it comprises the following steps:
a) producing a first stream of a mixture composed by at least one carrier gas and the nanostructures to customize,
b) producing a second stream of a mixture composed by at least one inert gas and one of the following options:
   b.1) at least one precursor of the dopant component;
   b.2) at least one type of microparticles;
   b.3) at least one precursor of the dopant component and at least one type of microparticles;
c) exposing the second stream produced in the previous step to a microwave plasma, through surface wave sustained discharges, yielding the following results depending on the option:
   c.1) the decomposition of the precursor of the dopant component or the precursors of the dopant components into their atomic and/or molecular constituents;
   c.2) the deagglomeration of microparticles into small nanoparticles;
   c.3) the decomposition of the precursor of the dopant component or the precursors of the dopant components into their atomic and/or molecular constituents, and the deagglomeration of the microparticles into small nanoparticles.
d) exposure of the nanostructures from the first stream to the elements resulting from exposure of the second stream to the microwave plasma, mentioned in the previous step, through the joining of the two streams,
e) collection of customized nanostructures resulting from the interaction described in step d).

In a preferred embodiment of the invention, the said first flow produced in step a) has a flow rate comprised between 4.2×10⁻⁶ and 8.3×10⁻⁴ m³/s, even more preferably between 8.3×10⁻⁶ and 3.3×10⁻⁴ m³/s, and even more preferably between 1.7×10⁻⁵ and 1.7×10⁻⁴ m³/s.

In another preferred embodiment of the invention, the said carrier gas of the mixture of step a) is selected from the group consisting of Helium, Neon, Argon, Krypton, Xenon and combinations thereof.

In another preferred embodiment of the invention, the said first flow produced in step a) has a mass flow rate of nanostructures to be customized comprised between 1.6×10⁻⁶ and 1.6×10⁻² gram/s, even more preferably between 1.6×10⁻⁵ and 0.8×10⁻² gram/s, and most preferably between 3.2×10⁻⁵ and 1.6×10⁻³ gram/s.

In another preferred embodiment of the invention, the said second flow produced in step b) has a flow rate comprised between 4.2×10⁻⁶ and 8.3×10⁻⁴ m³/s, even more preferably between 8.3×10⁻⁶ and 3.3×10⁻⁴ m³/s, and most preferably between 1.7×10⁻⁵ and 1.7×10⁻⁴ m³/s.

In another preferred embodiment of the invention, the said inert gas of the mixture of step b) is selected from the group consisting of Helium, Neon, Argon, Krypton, Xenon and combinations thereof.

In another preferred embodiment of the invention, the said dopant component of the mixture of step b) is selected from the group consisting of Boron, Nitrogen, Germanium, Phosphorus and combinations thereof.

In another preferred embodiment of the invention, the said second flow produced in step b) has a mass flow rate of microparticles comprised between 1.6×10⁻⁶ and 1.6×10⁻² gram/s, even more preferably between 1.6×10⁻⁵ and 0.8×10⁻² gram/s, and most preferably between 3.2×10⁻⁵ and 1.6×10⁻³ gram/s.

In another preferred embodiment of the invention, the said microparticles of the mixture of step b) have in their chemical composition one or more elements selected from the group consisting of Manganese, Tin and Iron.

In another preferred embodiment of the invention, the said microwave plasma is generated by a microwave source operating in a power range comprised between 100 W to 20 000 W.

The present invention also refers to a microwave plasma reactor for the customization of nanostructures, above described, the said reactor having a hollow body (1) comprising:
- a surface wave launching part (2) for plasma creation,
- a part (3) where the plasma expansion (4) is made, where there is also a fairly wide chemically active zone (5), and where the two streams are joined.
wherein the said parts (2) and (3) define in the reactor body (1), respectively, two inner zones (4-5) and (8) of operation.

In a preferred embodiment of the invention, the said parts (2) and (3) are integrally connected to each other, forming a single piece.

In another preferred embodiment of the invention, the hollow body (1) of the reactor is formed by a dielectric material selected from the group consisting of quartz, sapphire, alumina and combinations thereof.

In another preferred embodiment of the invention, the hollow body (1) of the reactor further comprises a part (7) of admission of a mixture of at least one carrier gas and the nanostructures to customize, being the admission part (7) integrated in the plasma expansion part (3) or attached to the plasma expansion part (3) through connection means.

In another embodiment of the invention, the hollow body (1) of the reactor further comprises an admission part (6) of admission of a mixture composed by at least one inert gas and one of the following options:
- at least one precursor of the dopant component;
- at least one type of microparticles;
- at least one precursor of the dopant component and at least one type of microparticles;
being the admission part (6) integrated in the surface wave launching part (2) or attached to the surface wave launching part (2) through connection means.

The present invention also relates to a system for implementing the aforementioned method for customizing nanostructures, comprising: a microwave plasma reactor having a hollow body (1) comprising, at least, a surface wave launching part (2), a part (3) where the plasma expansion (4) is made, where there is also a fairly wide chemically active zone (5), and where the two streams are joined; the said parts (2) and (3) define, respectively, two inner zones of operation in the reactor which are connected in parallel in fluid communication with each other.

In a preferred embodiment of the invention, the said parts (2) and (3) of the reactor body (1) are integrally connected to each other, forming a single piece.

In another embodiment of the invention, the said reactor body (1) is formed by a dielectric material selected from the group consisting of quartz, sapphire, alumina and combinations thereof.

In an even more preferred embodiment of the invention, the nanostructure customization system is characterized in that it comprises a microwave plasma reactor having a hollow body (1) comprising, at least,
- a surface wave launching part (2) for plasma creation,
- a part (3) where the plasma expansion (4) is made, connected to the surface wave launching part (2) for plasma creation, and which provides fluid communication between the parts (2) and (3) where the two streams are joined;
wherein the said parts (2) and (3) define in the reactor body (1) two inner zones (4-5) and (8) of operation.

### Brief Description of Drawings

The accompanying drawings and photographs illustrate exemplificative embodiments and typical results of the present invention and, together with the description, serve to explain the principles of the invention.

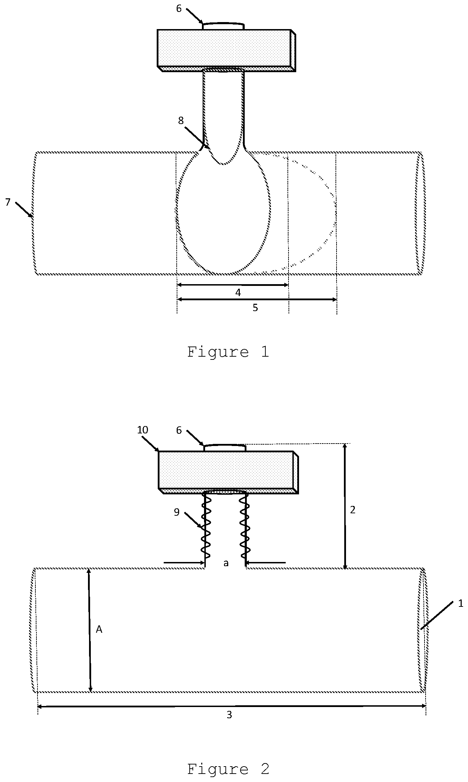

Figs. 1 to 2 show longitudinal cross-sectional drawings of a preferred system of the invention, also showing some physical characteristics related with the process of customizing autonomous nanostructures, such as zones (4), (5) and (8) corresponding to the plasma expansion zone, the chemically active zone and the hot plasma zone, respectively.

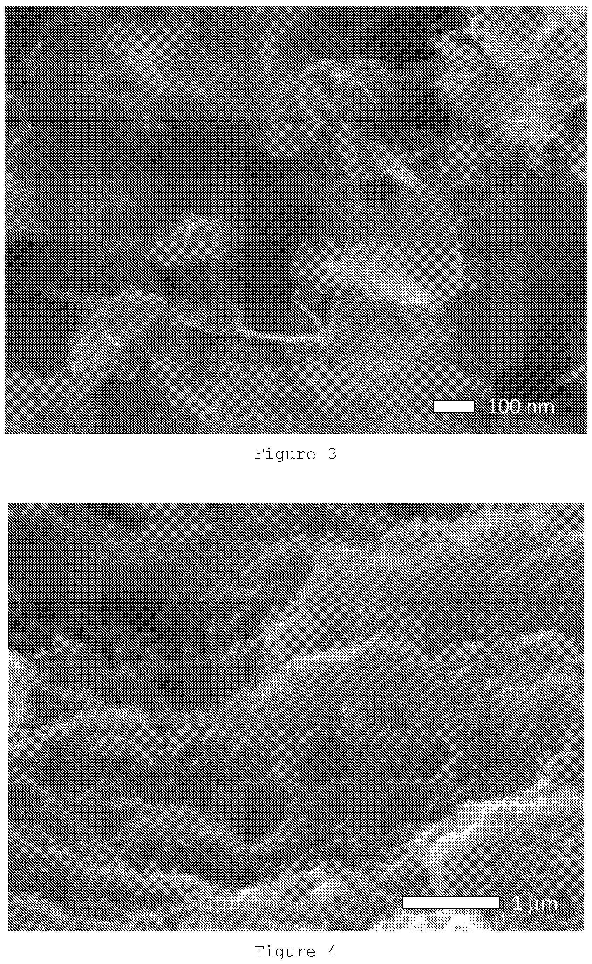

Fig. 3 shows an example of a scanning electron microscopy (SEM) image, obtained using a sample of graphene sheets before the customization, with a scale bar of 100 nm. This image with 80000 times magnification was obtained in SEI mode with secondary electrons and with an applied working voltage of 15.0 kV.
Fig. 4 shows an example of a scanning electron microscopy (SEM) image, obtained with the result of the customization of graphene sheets doped with atomic nitrogen (N-graphene), with a scale bar of 100 nm. This image with 80000 times magnification was obtained in SEI mode with secondary electrons and with an applied working voltage of 15.0 kV.

### Detailed Description of the Invention

The present invention relates to a process of customization of autonomous nanostructures using microwave plasmas, and to a reactor and system that implements the said process.

This versatile and ecologically correct process allows customizing autonomous structures in a controllable way, for example, and based on the graphene, it is possible to synthesize: N-graphene sheets; and graphene nanocomposites or N-graphene nanocomposites, with nanoparticles of manganese, tin, fluorine, etc.

The operation of the surface wave generated plasma reactor can be divided into two different operating zones, as can be seen in the drawing of figure 1. The first corresponds to the hot plasma zone (8), here, the energy carried by the surface waves is absorbed primarily by plasma electrons, which when accelerated transfer the power to heavy particles via collisions, in this zone, the temperature of the neutral particles can reach very high values, that can reach 4000 K. This zone covers the entire central part of the plasma column, around the axis, in the plasma hot zone (8). It is in this high energy density zone that the precursors of the dopant components (for example: nitrogen, ammonium, ammonia, germanium monoxide, germanium dioxide, urea, etc.) are injected, as well as, powdered metal oxides microparticles (for example: MnO₂, SnO₂ and Fe₂O₃). The patent contemplates three embodiments for the injection: of at least one precursor of the dopant component; of at least one type of microparticles; or at least one precursor of the dopant component and at least one type of microparticles.

Due to the collisions and intense chemistry involving radicals, decomposition processes of the injected dopant components take place, producing in this way atoms and molecules, which will be the main building blocks of the targeted nanostructures.

The powder of metal oxide microparticles when passing through zones with temperature above their melting point are converted into nanoparticles.

The transport of the gas phase atomic and molecular constituents resulting from the decomposition of the precursors as well as the microparticles, into cooler zones, is carried out through the second stream to the plasma expansion zone (4), where the plasma is milder, less energetic and colder, with temperatures around 1700 - 2500 K, zone (4) is partially overlapped with a substantially enlarged chemically active zone (5).

It is in these zones (4) and (5) where the two streams intersect, exposing the nanostructures to the atomic and molecular constituents resulting from the decomposition of the precursors and/or the nanoparticles, that the customization process takes place.

In the case of, for example, N-graphene, the nitrogen atoms have a similar configuration to carbon atoms and can be incorporated within carbon based nanostructures, the nitrogen atom density (molecular nitrogen dissociation) can be easily controlled by controlling the percentage of the carrier gas in the second stream, as well as of the plasma parameters (power, etc.).

In the case of being working with nanoparticles, they are electrically charged and will be placed onto activated points of the N-graphene lattice, which has a non-homogeneous charge distribution. Thus, the nanoparticles will be anchored to the N-graphene scaffold.

Fig. 4 shows a scanning electron microscopy (SEM) image, obtained using the customization system described herein, in this case the customization of a sample of graphene sheets through its doping with atomic nitrogen, where N-graphene is produced. The SEM characterization was performed using a field emission scanning electron microscope, operating with secondary electrons with applied working voltages of the order of 10-15 kV. Fig. 3 also shows a scanning electron microscopy (SEM) image, obtained using a sample of graphene sheets before the customization. The image was obtained using the field emission scanning electron microscope described above with the same working voltage. As can be seen, the immaculate crystalline structure of the flake-shaped graphene sheets shown in Fig. 3 is altered by its doping with atomic nitrogen, presenting a rough structure quite different from the original one.

It should be noted that, while the examples presented herein relate to the customization of graphene, the process, reactor and system of the present invention may be used to customize other nanostructures, such as germanene (the two-dimensional germanium homolog), hexagonal boron nitride, among others.

The expression "autonomous nanostructures" refers to independent nanostructures capable of supporting their own weight without deteriorating.

The term "stream" refers to a moving fluid.

The term "microwave plasma" refers to an ionized gas, created by applying an electric field of a surface wave excited by microwave power. The surface wave propagates at the interface between the plasma and a dielectric medium, where the electric field has maximum intensity. When propagating, the surface wave creates a plasma and generates its own propagation structure in a self-consistent way.

By "precursor" is meant an atomic or molecular product which in its chemical composition has the component that constitutes the raw material for doping the nanostructures.

By "precursor constituents" is meant the chemical elements of which the precursor is made, i.e., one or more of the following chemical elements: boron, nitrogen, germanium and phosphorus.

By "doped with X" means that an impurity X was introduced into the nanostructure crystalline network in order to suitably modify its physical properties.

It should be noted that regardless of the explicit presentation of the quantitative expression "greater than X", any X value presented in the course of the present description is to be interpreted as an approximate value of the actual X value, since such an approximation to the real value would reasonably be expected by a person skilled in the art due to experimental and/or measurement conditions which introduce deviations from the actual value.

The invention process for the customization of nanostructures comprises the following steps:
a) producing a first stream of a mixture composed by at least one carrier gas and the nanostructures to customize,
b) producing a second stream of a mixture composed by at least one inert gas and one of the following options:
   b.1) at least one precursor of the dopant component;
   b.2) at least one type of microparticles;
   b.3) at least one precursor of the dopant component and at least one type of microparticles;
c) exposing the second stream produced in the previous step to a microwave plasma, yielding the following results depending the option:
   C.1) decomposing the precursor of the dopant component or the precursors of the dopant components into their atomic and/or molecular constituents;
   c.2) deagglomerating the microparticles into small nanoparticles;
   c.3) decomposing the precursor of the dopant component or the precursors of the dopant components into their atomic and/or molecular constituents, and deagglomerating the microparticles into small nanoparticles.
d) exposing the nanostructures from the first stream to the elements resulting from exposure of the second stream to the microwave plasma, mentioned in the previous step, through the joining of the two streams,
e) collecting the customized nanostructures resulting from the interaction described in the previous step.

In step a) of producing a first stream, the said carrier gas is selected from the group comprising helium, neon, argon, krypton, xenon or a mixture thereof.

The mixture consisting of one or more carrier gases and the nanostructures, of step a), can be injected in a stream regime, for example in an admission part (7) of a reactor, with flow rates ranging from 4.2×10⁻⁶ and 8.3×10⁻⁴ m³/s, preferably between 8.3×10⁻⁶ and 3.3×10⁻⁴ m³/s, more preferably between 1.7×10⁻⁵ and 1.7×10⁻⁴ m³/s. The mass flow rate of nanostructures, in step a), may have values ranging from 1.6×10⁻⁶ and 1.6×10⁻² gram/s, preferably between 1.6×10⁻⁵ and 0.8×10⁻² gram/s, more preferably between 3.2×10⁻⁵ and 1.6×10⁻³ gram/s.

In step b) of producing a second stream, the said inert gas is selected from the group comprising helium, neon, Argon, krypton, xenon or a mixture thereof; the precursor of the dopant component may have a chemical composition containing one or more of the following elements: boron, nitrogen, germanium and phosphorus; and the microparticles which may have a chemical composition containing one or more of the following elements: manganese, tin and iron. By way of example, gaseous precursors of the dopant components, such as nitrogen or ammonia, may be used; or liquid precursors, such as ammonium; or solid precursors such as, for example, germanium monoxide, germanium dioxide or urea. Some examples of microparticles with the above-mentioned elements are MnO₂, SnO₂ and Fe₂O₃.

The mixture composed of at least one inert gas and one of the following options:
- at least one precursor of the dopant component;
- at least one type of microparticles;
- at least one precursor of the dopant component and at least one type of microparticles;
of step b), can be injected in a stream regime, for example into an admission part (6) of a reactor, with flow rates ranging from 4.2×10⁻⁶ and 8.3×10⁻⁴, preferably between 8.3×10⁻⁶ and 3.3×10⁻⁴ m³/s, more preferably between 1.7×10⁻⁵ and 1.7×10⁻⁴ m³/s. The mass flow rate of microparticles, in step b), may have values ranging from 1.6×10⁻⁶ and 1.6×10⁻² gram/s, preferably between 1.6×10⁻⁵ and 0.8×10-² gram/s, more preferably between 3.2×10⁻⁵ and 1.6×10⁻³ gram/s.

The said second stream, in step c), is exposed to a high frequency electric field, with a frequency in the range of 10 MHz to 28 GHz, preferably of 100 MHz to 14 GHz, more preferably of 500 MHz to 3 GHz, most preferably 2.45 GHz, belonging to a surface wave (9), excited by using microwave power, in the range of 100 to 20000 W, preferably of 500 to 10000 W, more preferably of 1000 to 6000 W, most preferably of 2000 to 6000 W.

This microwave power is applied, for example, by means of a field applicator (10), in order to generate a plasma, which in the adjacent zone (8) of the field applicator (10) has a high energy density (between 0.1 to 1 GW/m³), capable of decomposing the precursor of the dopant component or precursors of the dopant components present in the second stream into their atomic and molecular constituents, as well as, of deagglomerating the microparticles, present in the second stream, into small nanoparticles.

The atomic and molecular constituents, as well as the microparticles, flow from the hot plasma zone (8), where they were produced in gas phase, to the plasma expansion zone (4) and to the chemically active zone (5). It is in these two zones (4-5) that the two streams join together, and where the nanostructures from the first stream are exposed to the elements resulting from exposure of the second stream to the microwave plasma, zones where the nanostructures are customized. After customization, the nanostructures are collected, for example, in a cyclone filter system.

In summary, the process of the invention is based on the injection of two distinct streams into two distinct zones of a microwave plasma reactor, the first stream consisting of one or more carrier gases and by the nanostructures to customize and the second stream consisting of a mixture composed of at least one inert gas and one of the following options: at least one precursor of the dopant component; at least one type of microparticles; both of the previous options at the same time. The two streams, by being injected into two distinct admission parts of the reactor, are subjected to two distinct treatments, the first stream is injected into part (7) of the reactor and the second into part (6). The second stream is exposed to the electric field of a surface wave (9) excited by using microwave power, which is introduced, for example, by means of a field applicator (10), creating a plasma with high energy density (between 0.1 to 1 GW/m³), capable of decomposing the precursor of the dopant component or the precursors of the dopant components into their atomic and molecular constituents, as well as, of deagglomerating the microparticles into small nanoparticles. The second stream, after passing through this plasma hot zone (8), flows to the plasma expansion zone (4), where the plasma is milder, less energetic and colder, with temperatures around 1700 - 2500 K and to the substantially enlarged chemically active zone (5).

It is in these zones (4) and (5) that the atomic and molecular components as well as the nanoparticles coming from the second stream join the nanostructures from the first stream, in a mild plasma environment, where the nanostructures will be customized, and then collected, for example, in a cyclone filter system.

The present invention also relates to a microwave plasma reactor for nanostructure customization.

With reference to Figures 1 and 2, the invention reactor for the customization of nanostructures has a hollow body (1), whose body (1) comprises:
- a surface wave launching part (2) for plasma creation,
- a part (3) where the plasma expansion (4) is made, where there is also a fairly wide chemically active zone (5) and where the first and second streams are joined;
wherein the said parts (2) and (3) define in the reactor body (1), respectively, two inner zones (4-5) and (8) of operation, the reactor being characterized in that the cross-sectional area of the part (2) is smaller than a cross-sectional area (A) of the part (3).

In one aspect of the invention reactor, the said parts (2) and (3) are integrally connected to each other, forming a single part and providing fluid communication between these parts.

The hollow body (1) of the reactor is formed by a dielectric material selected from the group consisting of quartz, sapphire, alumina and combinations thereof.

The present invention also relates to a nanostructure customization system, the system of the invention comprising: a microwave plasma reactor having a hollow body (1) comprising, at least, a surface wave launching part (2), a part (3) where the plasma expansion (4) is made, where there is also a fairly wide chemically active zone (5), and where the first and second streams are joined; the said parts (2) and (3) define in the reactor, respectively, two inner zones of operation which are connected in parallel in fluid communication with each other.

The parts (2) and (3) of the reactor body (1) may be integrally connected to each other in order to form a single piece.

The said microwave plasma reactor body (1) is built from a dielectric material selected from the group comprising quartz, sapphire, alumina and similar materials and combinations thereof.

In a most preferred embodiment of the invention system, this is characterized in that it comprises a microwave plasma reactor having a hollow body (1) comprising, at least:
- a surface wave launching part (2) for plasma creation,
- a part (3) where the plasma expansion (4) is made, being connected to the surface wave launching part (2) for plasma creation, providing fluid communication between the parts (2) and (3) where the two streams are joined.
wherein the said parts (2) and (3) define in the reactor body (1), respectively, two inner zones (4-5) and (8) of operation; and wherein the cross-sectional area of the part (2) is smaller than a cross-sectional area of the part (3).

In a further variant to the previous embodiment, the said parts (2) and (3) of the reactor body (1) are integrally connected to each other, forming a single piece of dielectric material. Optionally, the parts (2) and (3) of the reactor body (1) are connected together by suitable connection means, within the reach of a person skilled in the art.

Several examples of the customization of nanostructures using microwave plasma technology according to the present invention are presented below. The examples described below should not be interpreted as constituting any type of limitation to the scope of the present invention.

EXAMPLE 1. For the production of nitrogen-doped graphene (N-graphene) with a production rate of more than 60 milligrams per hour, a plasma reactor formed by a quartz tube comprising a surface wave launching part (2) with an internal radius of 7.5 mm and a plasma expansion part (3) with an internal radius of 21.0 mm, is used. First, two streams are produced, the first consisting of a mixture with a total flow rate of 2.3×10⁻⁵ m³/s composed of argon as carrier gas and graphene nanostructures with an incorporation rate in the mixture of 1.6×10⁻⁵ gram/s, the second consisting of a mixture with a total flow rate of 4.2×10⁻⁶ m³/s composed of argon as carrier gas and of nitrogen as the precursor of the dopant component with an incorporation rate in the mixture of 4.2×10⁻⁷ m³/s. The flow rates are monitored by a controller coupled to gas flow meters and mass flow meters.

Thereafter, the said mixture of nitrogen and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through the part (8) of a microwave plasma torch generated by a surface wave (9) at atmospheric pressure. This plasma torch comprises a microwave generator, operating at a frequency of 2.45 GHz, a waveguide system (10) including an isolator, directional couplers and a tuner, and a surfatron-type field applicator. The system is terminated by an adjustable component that short-circuits the microwave. A microwave power of 1 kW is supplied to the plasma.

The two streams are joined in the part (3) where the plasma expansion (4) is made, where exists a very wide chemically active zone (5). The thus formed N-graphene nanostructures are collected by a filtration device.

EXAMPLE 2. For the production of nanocomposites of graphene with manganese (Mn-graphene) with a production rate of more than 6 milligrams per hour, the system uses the assembly described above (example 1) with internal radii of 7.5 mm in part (2) and 21.0 mm in part (3). First, two streams are produced, the first consisting of a mixture with a total flow rate of 4.2×10⁻⁶ m³/s composed of argon as carrier gas and graphene nanostructures with an incorporation rate in the mixture of 1.6×10⁻⁶ gram/s, the second consisting of a mixture with a total flow rate of 4.2×10⁻⁶ m³/s composed of argon as carrier gas and of MnO₂ microparticles with an incorporation rate in the mixture of 1.6×10⁻⁶ gram/s. The flow rates are monitored through a controller coupled to gas flow meters and mass flow meters.

Thereafter, the said mixture of MnO₂ microparticles and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through the part (8) of a microwave plasma torch generated by a surface wave (9) at atmospheric pressure. This plasma torch is the same as described above (example 1), operating at the same frequency of 2.45 GHz, and with the same type of field applicator. The microwave power supplied to the plasma is 100 W.

The two streams are joined in the part (3) where the plasma expansion (4) is made, where exists a very wide chemically active zone (5). The thus formed nanocomposites of graphene with manganese (Mn-graphene) are collected by an extraction device.

EXAMPLE 3. For the production of nanocomposites of graphene with tin (Sn-graphene) with a production rate of more than 120 milligrams per hour, the system uses the assembly described above (example 1) with internal radii of 7.5 mm in part (2) and 21.0 mm in part (3). First, two streams are produced, the first consisting of a mixture with a total flow rate of 6.6×10⁻⁵ m³/s composed of argon as carrier gas and graphene nanostructures with an incorporation rate in the mixture of 3.62×10⁻⁵ gram/s, the second consisting of a mixture with a total flow rate of 3.3×10⁻⁵ m³/s composed of argon as carrier gas and of SnO₂ microparticles with an incorporation rate in the mixture of 1.6×10⁻⁵ gram/s. The flow rates are monitored through a controller coupled to gas flow meters and mass flow meters.

Thereafter, the said mixture of SnO₂ microparticles and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of said mixture proceeds through the part (8) of a microwave plasma torch generated by a surface wave (9) at atmospheric pressure. This plasma torch is the same as described above (example 1), operating at the same frequency of 2.45 GHz, and with the same type of field applicator. The microwave power supplied to the plasma is 1 kW.

The two streams are joined in the part (3) where the plasma expansion (4) is made, where exists a very wide chemically active zone (5). The thus formed nanocomposites of graphene with tin (Sn-graphene) are collected by an extraction device.

EXAMPLE 4. For the production of nanocomposites of graphene with iron (Fe-graphene) with a production rate of more than 240 milligrams per hour, the system uses the assembly described above (example 1) with internal radii of 7.5 mm in part (2) and 21.0 mm in part (3). First, two streams are produced, the first consisting of a mixture with a total flow rate of 6.6×10⁻⁵ m³/s composed of argon as carrier gas and graphene nanostructures with an incorporation rate in the mixture of 6.4×10⁻⁵ gram/s, the second consisting of a mixture with a total flow rate of 3.3×10⁻⁵ m³/s composed of argon as carrier gas and of Fe₂O₃ microparticles with an incorporation rate in the mixture of 1.6×10⁻⁵ gram/s. The flow rates are monitored through a controller coupled to gas flow meters and mass flow meters.

Thereafter, the said mixture of Fe₂O₃ microparticles and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch is the same as described above (example 1), operating at the same frequency of 2.45 GHz, and with the same type of field applicator. The microwave power supplied to the plasma is 2 kW.

The two streams are joined in the part (3) where the plasma expansion (4) is made, where exists a very wide chemically active zone (5). The thus formed nanocomposites of graphene with iron (Fe-graphene) are collected by an extraction device.

EXAMPLE 5. For the production of nitrogen-doped graphene (N-graphene) with a production rate of more than 2.4 grams per hour, a plasma reactor formed by a quartz tube comprising a surface wave launching part (2) with an internal radius of 18.0 mm and a plasma expansion part (3) with an internal radius of 32.0 mm, is used. First, two streams are produced, the first consisting of a mixture with a total flow rate of 3.3×10⁻⁴ m³/s composed of argon as carrier gas and graphene nanostructures with an incorporation rate in the mixture of 6.4×10⁻⁴ gram/s, the second consisting of a mixture with a total flow rate of 6.6×10⁻⁵ m³/s composed of argon as carrier gas and a solid precursor, in this case urea, with an incorporation rate in the mixture of 3,2×10⁻⁴ gram/s. The flow rates are monitored by a controller coupled to gas flow meters and mass flow meters.

Thereafter, the said mixture of urea and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch comprises a microwave generator, operating at a frequency of 2.45 GHz, a waveguide system (10) including an isolator, directional couplers and a tuner, and a surfatron-type field applicator. The system is terminated by an adjustable component that short-circuits the microwave. The microwave power supplied to the plasma is 6 kW.

The two streams are joined in the part (3) where the plasma expansion (4) is made, where exists a very wide chemically active zone (5). The thus formed N-graphene nanostructures are collected by a filter system.

EXAMPLE 6. For the production of nitrogen-doped graphene (N-graphene) with a production rate of more than 60 grams per hour, a plasma reactor formed by a quartz tube comprising a surface wave launching part (2) with an internal radius of 18.0 mm and a plasma expansion part (3) with an internal radius of 75.0 mm, is used. First, two streams are produced, the first consisting of a mixture with a total flow rate of 8.3×10⁻⁴ m³/s composed of argon as carrier gas and graphene nanostructures with an incorporation rate in the mixture of 1.6×10⁻² gram/s, the second formed by a mixture composed of a liquid precursor of nitrogen, in this case ammonium, that after being vaporized using an ultrasonic bath, has an incorporation rate in the mixture of 6.6×10⁻⁵ m³/s and uses argon as carrier gas, with a flow rate of 8.3×10⁻⁴ m³/s. The flow rates are monitored by a controller coupled to two flow meters.

Thereafter, the said mixture of vaporized ammonium and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch comprises a microwave generator, operating at a frequency of 2.45 GHz, a waveguide system (10) including an isolator, directional couplers and a tuner, and a surfatron-type field applicator. The system is terminated by an adjustable component that short-circuits the microwave. The microwave power supplied to the plasma is 20 kW.

The two streams are joined in the part (3) where the plasma expansion (4) is made, where exists a very wide chemically active zone (5). The thus formed N-graphene nanostructures are collected by a filtration device.

EXAMPLE 7. For the production of nitrogen-doped graphene (N-graphene) with a production rate of more than 2.4 grams per hour, the system uses the assembly described above, in example 5, with internal radii of 18.0 mm in part (2) and 32.0 mm in part (3). First, two streams are produced, the first consisting of a mixture of 50% helium and 50% neon as carrier gases with a total flow rate of 1.3×10⁻⁴ m³/s and graphene nanostructures with an incorporation rate in the mixture of 6.4×10⁻⁴ gram/s, the second consisting of a mixture with a total flow rate of 6.6×10⁻⁵ m³/s composed of argon as carrier gas and of Nitrogen as the precursor of the dopant component with an incorporation rate in the mixture of 4.2×10⁻⁷ m³/s. The flow rates are monitored by a controller coupled to gas flow meters and mass flow meters.

Thereafter, the said mixture containing nitrogen, helium and neon is introduced in a stream regime, in an admission part (6) of the reactor, consisting of a quartz tube and installed in the surface wave launching part (2). Simultaneously, the said mixture composed of graphene nanostructures, helium and neon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch is the same as described above (example 5), operating at the same frequency of 2.45 GHz, and with the same type of field applicator. The microwave power supplied to the plasma is 6 kW. The two streams are joined in the part (3) where the plasma expansion (4) is made, where exists a very wide chemically active zone (5). The thus formed N-graphene nanostructures are collected by a filtration device.

EXAMPLE 8. For the production of nanocomposites of graphene with tin (Sn-graphene) with a production rate of more than 60 grams per hour, the system uses the assembly described above (example 6) with internal radii of 18.0 mm in part (2) and 75.0 mm in part (3). First, two streams are produced, the first consisting of a mixture of 90% argon and 10% xenon as carrier gases with a total flow rate of 8.3×10⁻⁴ m³/s and graphene nanostructures with an incorporation rate in the mixture of 1.6×10⁻² gram/s, the second consisting of a mixture with a total flow rate of 8.3×10⁻⁴ m³/s composed of argon as carrier gas and of SnO₂ microparticles with an incorporation rate in the mixture of 1.6×10⁻² gram/s. The flow rates are monitored through a controller coupled to gas flow meters and mass flow meters.

Thereafter, the said mixture containing SnO₂ microparticles, argon and xenon is introduced in a stream regime in an admission part (6) of the reactor, consisting of a quartz tube and installed in the surface wave launching part (2). Simultaneously, the said mixture composed of graphene nanostructures, argon and xenon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch is the same as described above (example 6), operating at the same frequency of 2.45 GHz, and with the same type of field applicator. The microwave power supplied to the plasma is 20 kW.

The two streams are joined in the part (3) where the plasma expansion (4) is made, where exists a very wide chemically active zone (5). The thus formed nanocomposites of graphene with tin (Sn-graphene) are collected by an extraction device.

EXAMPLE 9. For the production of nanocomposites of N-graphene with tin with a production rate of more than 240 milligrams per hour, the system uses the assembly described above (example 6) with internal radii of 18.0 mm in part (2) and 75.0 mm in part (3). First, two streams are produced, the first consisting of a mixture with a total flow rate of 2.6×10⁻⁴ m³/s composed of argon as carrier gas and graphene nanostructures with an incorporation rate in the mixture of 6.4×10⁻⁵ gram/s, the second consisting of a mixture with a total flow rate of 6,6×10⁻⁵ m³/s composed of Argon as carrier gas, of Tin microparticles (SnO₂) with an incorporation rate in the mixture of 1,6×10⁻⁵ gram/s and of Nitrogen as the precursor of the dopant component with an incorporation rate in the mixture of 4,2×10⁻⁷ m³/s. The flow rates are monitored through controllers coupled to gas flow meters and mass flow meters.

Thereafter, the said mixture of SnO₂ microparticles, nitrogen and argon is introduced in a stream regime, in an admission part (6) of the reactor, consisting of a quartz tube and installed in the surface wave launching part (2) . Simultaneously, the said mixture composed of graphene nanostructures and argon is introduced in an admission part (7) of the reactor, constituted by a quartz tube and installed in part (3) where the expansion of the plasma is made. Subsequently, the stream of said mixture proceeds through the part (8) of a microwave plasma torch generated by a surface wave (9) at atmospheric pressure. This plasma torch is the same as described above (example 6), operating at the same frequency of 2.45 GHz, and with the same type of field applicator. The microwave power supplied to the plasma is 6 kW.

The two streams are joined in the part (3) where the plasma expansion (4) is made, where exists a very wide chemically active zone (5). The thus formed nanocomposites of N-graphene with Tin are collected by an extraction device.

EXAMPLE 10. For the production of nanocomposites of N-graphene with iron with a production rate of more than 240 milligrams per hour, the system uses the assembly described above (example 6) with internal radii of 18.0 mm in part (2) and 75.0 mm in part (3). First, two streams are produced, the first consisting of a mixture with a total flow rate of 2.6×10⁻⁴ m³/s composed of argon as carrier gas and graphene nanostructures with an incorporation rate in the mixture of 6.4×10⁻⁵ gram/s, the second consisting of a mixture with a total flow rate of 6,6×10⁻⁵ m³/s composed of argon as carrier gas, of iron microparticles (Fe₂O₃) with an incorporation rate in the mixture of 1,6×10⁻⁵ gram/s and of ammonia as the precursor of the dopant component (N) with an incorporation rate in the mixture of 4,2×10⁻⁷ m³/s. The flow rates are monitored through controllers coupled to gas flow meters and mass flow meters.

Thereafter, the said mixture of Fe₂O₃ microparticles, ammonia and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of said mixture proceeds through part (8) of a microwave plasma torch generated by a surface wave (9) at atmospheric pressure. This plasma torch is the same as described above (example 6), operating at the same frequency of 2.45 GHz, and with the same type of field applicator. The microwave power supplied to the plasma is 6 kW.

The two streams are joined in the part (3) where the plasma expansion (4) is made, where exists a very wide chemically active zone (5) . The thus formed nanocomposites of N-graphene with iron are collected by an extraction device.

EXAMPLE 11. For the production of nanocomposites of N-graphene with manganese with a production rate greater than 60 grams per hour, the system uses the assembly described above (example 6) with internal radii of 18.0 mm in part (2) and 75.0 mm in part (3).

First, two streams are produced, the first consisting of a mixture with a total flow rate of 8,3×10⁻⁴ m³/s composed of argon as carrier gas and graphene nanostructures with an incorporation rate in the mixture of 1,6×10⁻² gram/s, the second consisting of a mixture with a total flow rate of 8,3×10⁻⁴ m³/s composed of argon as carrier gas, of manganese microparticles (MnO₂) with an incorporation rate in the mixture of 1.6×10⁻² gram/s and of ammonia as the precursor of the dopant component (N) with an incorporation rate in the mixture of 4,2×10⁻⁶ m³/s. The flow rates are monitored through controllers coupled to gas flow meters and mass flow meters.

Thereafter, the said mixture of manganese microparticles (MnO₂), ammonia and argon is introduced in a stream regime, in an admission part (6) of the reactor, consisting of a quartz tube and installed in the surface wave launching part (2). Simultaneously, the said mixture composed of graphene nanostructures and argon is introduced in an admission part (7) of the reactor, constituted by a quartz tube and installed in part (3) where the expansion of the plasma is made. Subsequently, the stream of the said mixture proceeds through part (8) of a microwave plasma torch generated by a surface wave (9) at atmospheric pressure. This plasma torch is the same as described above (example 6), operating at the same frequency of 2.45 GHz, and with the same type of field applicator. The microwave power supplied to the plasma is 20 kW.

The two streams are joined in the part (3) where the plasma expansion (4) is made, where exists a very wide chemically active zone (5). The thus formed nanocomposites of N-graphene with Manganese are collected by an extraction device.

## Claims

1. Process of customization of autonomous nanostructures, **characterized in that** it comprises the following steps:
a) producing a first stream of a mixture composed by at least one carrier gas and the nanostructures to customize,
b) producing a second stream of a mixture composed by at least one inert gas and one of the following options:
b.1) at least one precursor of the dopant component;
b.2) at least one type of microparticles;
b.3) at least one precursor of the dopant component and at least one type of microparticles;
c) exposing the second stream produced in the previous step to a microwave plasma, using surface wave sustained discharges, yielding the following results depending on the option:
c.1) decomposing the precursor of the dopant component or the precursors of the dopant components into their atomic and/or molecular constituents;
c.2) deagglomerating the microparticles into small nanoparticles;
c.3) decomposing the precursor of the dopant component or the precursors of the dopant components into their atomic and/or molecular constituents, and deagglomerating the microparticles into small nanoparticles;
d) exposing the nanostructures from the first stream to the elements resulting from exposure of the second stream to the microwave plasma, referred to in step c), through the joining of the two streams;
e) collecting the customized nanostructures resulting from the interaction described in step d).

2. Process according to claim 1, **characterized in that** the first stream produced in step a) has a flow rate comprised between 4.2×10⁻⁶ and 8.3×10⁻⁴ m³/s, preferably between 8.3×10⁻⁶ and 3.3×10⁻⁴ m³/s, and most preferably between 1.7×10⁻⁵ and 1.7×10⁻⁴ m³/s.

3. Process according to any of the claims 1 to 2 **characterized in that** the carrier gas of the mixture of step a) is selected from the group consisting of helium, neon, argon, krypton, xenon and combinations thereof.

4. Process according to any of the claims 1 to 3 **characterized in that** the first stream produced in step a) has a mass flow rate of nanostructures to be customized comprised between 1.6×10⁻⁶ and 1.6×10⁻² gram/s, preferably between 1.6×10⁻⁵ and 0.8×10⁻² gram/s, more preferably between 3.2×10⁻⁵ and 1.6×10⁻³ gram/s.

5. Process according to any of the claims 1 to 4 **characterized in that** the second stream produced in step b) has a flow rate comprised between 4.2×10⁻⁶ and 8.3×10⁻⁴ m³/s, preferably between 8.3×10⁻⁶ and 3.3×10⁻⁴ m³/s, and more preferably between 1.7×10⁻⁵ and 1.7×10⁻⁴ m³/s.

6. Process according to any of the claims 1 to 5 **characterized in that** the inert gas of the mixture of step b) is selected from the group consisting of helium, neon, argon, krypton, xenon and combinations thereof.

7. Process according to any of the claims 1 to 6 **characterized in that** the dopant component of the mixture of step b) is selected from the group consisting of boron, nitrogen, germanium, phosphorus and combinations thereof.

8. Process according to any of the claims 1 to 7 **characterized in that** the second stream produced in step b) has a mass flow rate of microparticles comprised between 1.6×10⁻⁶ and 1.6×10⁻² gram/s, preferably between 1.6×10⁻⁵ and 0.8×10⁻² gram/s, and most preferably between 3.2×10⁻⁵ and 1.6×10⁻³ gram/s.

9. Process according to any of the claims 1 to 8 **characterized in that** the microparticles of the mixture of step b) have in their chemical composition one or more elements selected from the group consisting of manganese, tin and iron.

10. Process according to any of the claims 1 to 9 **characterized in that** the microwave plasma is generated by a microwave source operating in a power range comprised between 100 W to 20000 W.

11. A microwave plasma reactor for the customization of autonomous nanostructures **characterized by** having a hollow body (1) comprising:
• a surface wave launching part (2) for plasma creation,
• a part (3) where the plasma expansion (4) is made, which has an extended chemically active zone (5), and where the two streams are joined,
with the said parts (2) and (3) defining in the reactor body (1), respectively, two inner zones (4-5) and (8) of operation.

12. Reactor according to claim 11, **characterized in that** the said parts (2) and (3) are integrally connected to each other, forming a single piece.

13. Reactor according to any of the claims 11 to 12 **characterized in that** the hollow body (1) of the reactor is formed by a dielectric material selected from the group consisting of quartz, sapphire, alumina and combinations thereof.

14. Reactor according to any of the claims 11 to 13 **characterized in that** the hollow body (1) of the reactor further comprises an admission part (7) of a mixture of at least one carrier gas and the nanostructures to customize, being the admission part (7) integrated in the plasma expansion part (3) or attached to the plasma expansion part (3) through connection means.

15. Reactor according to any one of the claims 11 to 14 **characterized in that** the hollow body (1) of the reactor further comprises an admission part (6) that admits a mixture composed by at least one inert gas and one of the following options:
• at least one precursor of the dopant component;
• at least one type of microparticles;
• at least one precursor of the dopant component and at least one type of microparticles;
with the admission part (6) being integrated in the surface wave launching part (2) or attached to the surface wave launching part (2) through connection means.

16. System to implement the customization process of autonomous nanostructures of claims 1-10, **characterized in that** it comprises: a microwave plasma reactor having a hollow body (1) comprising, at least, a surface wave launching part (2), a part (3) where the plasma expansion (4) is made, and where there is also an extended chemically active zone (5), where the two streams are joined; the said parts (2) and (3) defining, respectively, two inner zones of operation in the reactor which are connected in parallel in fluid communication with each other.

17. System according to claim 16, **characterized in that** the said parts (2) and (3) of the reactor hollow body (1) are integrally connected to each other, forming a single piece.

18. System according to any of the claims 16 to 17 **characterized in that** the said reactor body (1) is formed by a dielectric material selected from the group consisting of quartz, sapphire, alumina and combinations thereof.

19. System according to any one of the claims 16 to 18, **characterized in that** it comprises a microwave plasma reactor having a hollow body (1) which comprises, at least,
• a surface wave launching part (2) for plasma creation,
• a part (3) where the plasma expansion (4) is made, connected to the surface wave launching part (2) for plasma creation, and which provides fluid communication between the parts (2) and (3) where the two streams are joined,
with the said parts (2) and (3) defining in the reactor body (1) two inner zones (4-5 and 8) of operation.
